(19) **Europäisches Patentamt / European Patent Office / Office européen des brevets**

(11) **EP 2 093 911 A2**

(12) **EUROPEAN PATENT APPLICATION**

(43) Date of publication:
26.08.2009 Bulletin 2009/35

(51) Int Cl.:
*H04H 20/89* (2008.01)

(21) Application number: 08170248.2

(22) Date of filing: 28.11.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 28.11.2007 KR 20070122307
27.11.2008 KR 20080119041

(71) Applicant: LG Electronics Inc.
Seoul 150-721 (KR)

(72) Inventors:
• Suh, Jong Yeul
Seoul 137-724 (KR)

• O Oh, Hyen
Seoul 137-724 (KR)
• Kim, Bong Myon
Seoul 137-724 (KR)
• Song, Jae Hyung
Seoul 137-724 (KR)
• Kim, Jin Pil
Seoul 137-724 (KR)

(74) Representative: Cabinet Plasseraud
52, rue de la Victoire
75440 Paris Cedex 09 (FR)

(54) **Receiving system and audio data processing method thereof**

(57) A receiving system and audio data processing method thereof are disclosed, by which a viewer can be provided with a high quality sound service via a mobile broadcast in a manner of supporting a multi-channel audio service in terrestrial DMB.

FIG. 1

**Description**

## BACKGROUND OF THE INVENTION

### Field of the Invention

The present invention relates to a broadcasting system, and more particularly, to a receiving system and audio data processing method thereof. Although the present invention is suitable for a wide scope of applications, it is particularly suitable for supporting a multi-channel audio service.

### Discussion of the Related Art

Recently, digital multimedia broadcasting (DMB) in the mobile broadcasting, which is capable of providing high quality audio and video services no matter when or where, has evolved from 'listening broadcasting' to 'listening & viewing broadcasting'. Based on its excellent mobile reception characteristics, the DMB establishes complementary relations with digital terrestrial TV broadcasting, which pursues high image quality and high audio quality, in a manner of delivering various contents including music, text, moving picture and the like via such a portable terminal as PDA and the like.

The DMB is based on Eureka-147 digital audio broadcasting (DAB) adopted as the European terrestrial radio standard. In particular, the Eureka-147 has been devised for digital audio broadcasting (DAB) and is also used as the basic technology of terrestrial DMB that provides services of moving pictures in a small screen size using such a narrow frequency bandwidth as 2MHz.

The DMB enables data transmissions in other formats including TPEG, BWS (broadcast website) and the like as well as MPEG-4 data transmission and is able to support multimedia broadcasting of mobile reception. This is applicable to such a conventional mobile device as a PDA, a portable DVD, a mobile phone and the like as well as a DMB receiver and considerably brings industrial effects.

The MPEG-4 uses the content based image displaying method and processes a screen in a manner of separating the screen into video objects having features such as shape information, motion information and texture information. The content based image displaying method establishes mutual relations between objects in various multimedia applications to facilitate access and manipulation of the objects.

In particular, an object oriented interactive function in MPEG-4 independently handles object elements of video or audio in multimedia data access and enables a user to freely configure video or audio by combining the object elements together by link. For instance, the processing for replacing the hero by leaving a background of a picture intact or the like is possible in a production step only. Yet, MPEG-4 enables the processing in a user step.

## SUMMARY OF THE INVENTION

Accordingly, the present invention is directed to a receiving system and audio data processing method thereof that substantially obviate one or more problems due to limitations and disadvantages of the related art.

An object of the present invention is to provide a receiving system and audio data processing method thereof, by which a multi-channel audio service can be supported in terrestrial DME.

Another object of the present invention is to provide a receiving system and audio data processing method thereof, by which a multi-channel audio service can be supported in a manner of receiving BASC audio signal and MPEG surround audio signal.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a receiving system according to the present invention includes a receiving unit, a de-packetizing unit, and a multi-channel audio decoder. The receiving unit receives a mobile broadcast signal including a first audio signal, a second audio signal for multi-channel and system information. The de-packetizing unit identifies the first and second audio signals included in the mobile broadcast signal received by the receiving unit with reference to identification information allocated to each of the audio signals. The multi-channel audio decoder reconstructs a multi-channel audio signal by decoding the first audio signal identified and outputted by the de-packetizing unit based on inputted audio codec information and decodes the second audio signal identified and outputted by the de-packetizing unit based on the decoded first audio signal and the audio codec information.

The receiving system further includes a system information processing unit extracting identification information for identifying the first audio signal and the second audio signal from the system information included in the mobile broadcast signal received by the receiving unit, the system information processing unit outputting the extracted identification information to the de-packetizing unit, the system information processing unit extracting the audio codec information for decoding the first audio signal and the second audio signal, the system information processing unit outputting the extracted audio codec information to the multi-channel audio decoding unit.

Preferentially, the first audio signal includes a BSAC audio signal and the second audio signal includes an MPEG surround signal.

In another aspect of the present invention, a method of processing data in a receiving system includes the steps of receiving a mobile broadcast signal including a first audio signal, a second audio signal for multi-channel and system information, identifying the first and second audio signals included in the received mobile broadcast signal with reference to identification information allocated to each of the audio signals, reconstructing a multi-channel audio signal by decoding the first audio signal identified in the identifying step based on inputted audio codec information and decoding the second audio signal identified in the identifying step based on the decoded first audio signal and the audio codec information.

The method further includes the step of extracting identification information for identifying the first audio signal and the second audio signal from the system information included in the received mobile broadcast signal, outputting the extracted identification information to the identifying step, extracting the audio codec information for decoding the first audio signal and the second audio signal, outputting the extracted audio codec information to the multi-channel audio reconstructing step.

Accordingly, the present invention enables a multi-channel audio service in terrestrial DMB, thereby providing a viewer with a high-quality audio service through mobile broadcasting.

It is to be understood that both the foregoing general description and the following detailed description of the present invention are exemplary and explanatory and are intended to provide further explanation of the invention as claimed.


## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a diagram of a terrestrial DMB packet structure according to one embodiment of the present invention;

FIG. 2 is a diagram of an example of a stream type value according to the present invention;

FIGs. 3 to 5 are diagrams for a method of packetizing multi-channel audio data to MPEG SL according to embodiments of the present invention;

FIG. 6 and FIG. 7 are diagrams of a process for parsing a system information table according to the present invention;

FIG. 8 is a block diagram of a receiving system for receiving and outputting multi-channel audio data according to one embodiment of the present invention;

FIG. 9A and FIG. 9B are diagrams of a syntax structure of AudioSpecificConfig according to one embodiment of the present invention;

FIG. 10 is a diagram of GetAudioObjectType() syntax structure according to one embodiment of the present invention;

FIG. 11 is a diagram of GASpecificConfig syntax structure according to one embodiment of the present invention;

FIG. 12A and FIG. 12B are diagrams of SpatialSpecificConfig() syntax structure according to one embodiment of the present invention;

FIG. 13 is a table of exemplary values defined in bsFreqRes field of SpatialSpecificConfig() according to the present invention;

FIG. 14A and FIG. 14B are tables of exemplary values defined in bsTreeConfig field of SpatialSpecificeonfig() according to the present invention;

FIG. 15 is a table of exemplary values defined in bsQuantMode field of SpatialSpecificeonfig() according to the present invention;

FIG. 16 is a table of exemplary values defined in bsFixedGainsSur field of SpatialSpecificConfig() according to the present invention;

FIG. 17 is a table of exemplary values defined in bsFixedGainsLFE field of SpatialSpecificConfig() according to the present invention;

FIG. 18 is a table of exemplary values defined in bsFixedGainsDMX field of SpatialSpecificConfig() according to the present invention;

FIG. 19 is a table of exemplary values defined in bsTempShapeConfig field of Spatialspecificconfig() according to the present invention;

FIG. 20 is a table of exemplary values defined in bsDecorrConfig field of SpatialSpecificConfig() according to the present invention;

FIG. 21 is a table of exemplary values defined in bsEnvQuantMode field of SpatialSpecificConfig() according to the present invention;

FIG. 22 is a table of exemplary values defined in bs3DaudioHRTFset field of SpatialSpecificConfig() according to the present invention; and

FIG. 23 is a diagram of SpatialFrame() syntax structure according to one embodiment of the present invention.

## DETAILED DESCRIPTION OF THE INVENTION

Reference will now be made in detail to the preferred embodiments of the present invention, examples of which are illustrated in the accompanying drawings.

Wherever possible, the same reference numbers will be used throughout the drawings to refer to the same or like parts.

The present invention enables such a multi-channel audio signal as 5.1 channel to be transmitted in a transmitting system capable of sending terrestrial DMB. And, the present invention enables the multi-channel audio signal to be received and provided to a user in a receiving system capable of receiving the terrestrial DMB.

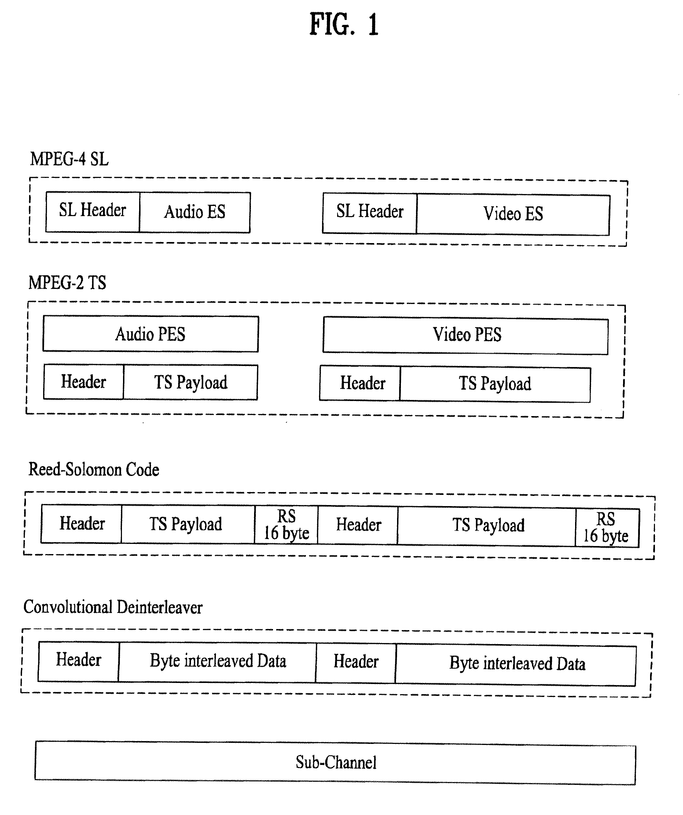

FIG. 1 is a diagram of a terrestrial DMB packet structure according to one embodiment of the present invention.

Referring to FIG. 1, MPEG-4 system within a transmitting system for DMB packetizes audio/video elementary stream (A/V ES), which is compressed and coded by the preset compression algorithm, into MPEG-4 sync layer (SL).

For instance, video is compressed and coded using MPEG-4/AVC (advanced video coding) (MPEG-4 part 10) and is then packetized into MPEG-4 SL (sync layer). In order to support an object oriented interactive function, it is able to packetize MPEG-4 BIFS (binary format for scenes) interactive contents into MPEG-4SL as well.

Audio is compressed and coded using MEPG-4/BSAe (bit sliced arithmetic coding) scheme and is then packetized into MPEG-4 SL. Alternatively, audio is compressed and coded using MPEG surround scheme and is then packetized into MPEG-4 SL. For another instance, it is able to packetize an audio ES according to combination if MPEG-4 BSAC and MPEG surround into MPEG-4 SL. For clarity and convenience of explanation, the MPEG-4 BSAC audio signal shall be called main audio data in the following description.

MPEG-2 system within a transmitting system packetizes an MPEG-4 SL packet, which was packetized in the MPEG-4 system, into a PES (packetized elementary stream) format and then packetizes it into an MPEG-2 transport stream (TS). The MPEG-2 TS packet includes a header and a payload. The MPEG-2 system attaches 16-byte Reed-Solomon code to an end of TS packet by performing Reed-Solomon coding on the MPEG-2 TS packet, performs byte interleaving, and then sends a corresponding result to a receiving system.

Thus, a transmitting side of terrestrial DMB transmits audio/video (A/V) objects suing the MPEG-4 system standard and scene description information indicating temporal and spatial configurations of the A/V objects. Hence, a receiving system configures a scene, renders the scene suitable for a 2-dimensioainl display, and then displays the rendered scene. Substantially, the scene description information has a tree structure and each node of the tree indicates a corresponding A/V object. An object descriptor OD) is connected to a terminal node of the tree and includes information indicating various attributes of the corresponding object and a location of real data corresponding to the object. Therefore, the receiving system refers to the scene configuration information, determines a spatial-temporal location of each object, brings object data using OD, and then arranges it to a scene according to a specified attribute.

Moreover, the transmitting side sends a multiplexed stream that carries PAT (program association table) of MPEG-2 TS and an initial object descriptor (IOD) of MPEG-4 system standard. In this case, the IOD is contained in PMT (program map table) of the MPEG-2 TS.

In particular, when MPEG-4 compressed and coded multimedia is packetized into MPEG-2 TS, IOD and SL (sync layer) descriptor defined by MPEG-4 are included in the PMT syntax.

The IOD describes profile and level information of the transmitted MPEG-4 content. Moreover the IOD includes ES (elementary stream ID) information of OD stream and ES (elementary stream) ID information of SD (scene description) stream. In particular, information on OD stream and information on SD stream are described by an ES descriptor of IOD. The IOD plays a role as a pointer that connects BIFS of SD to OD. Hence, if MPEG-4 system of the receiving system interprets the IOD, it is able to obtain a logical channel ES_ID that carries information on scene description and information on each object. Subsequently, a scene is configured by accessing each logical channel, information on each object is obtained, and a logical channel about audio or video can be then obtained.

The OD includes an ES descriptor. And, the ES descriptor includes ES_ID and DecoderConfigDescriptor. The DecoderConfigDescriptor includes stream type information indicating a type of a transported stream, objectTypeIndication indicating a type of an object, and Decoderspecific info indicating decoding information on each stream.

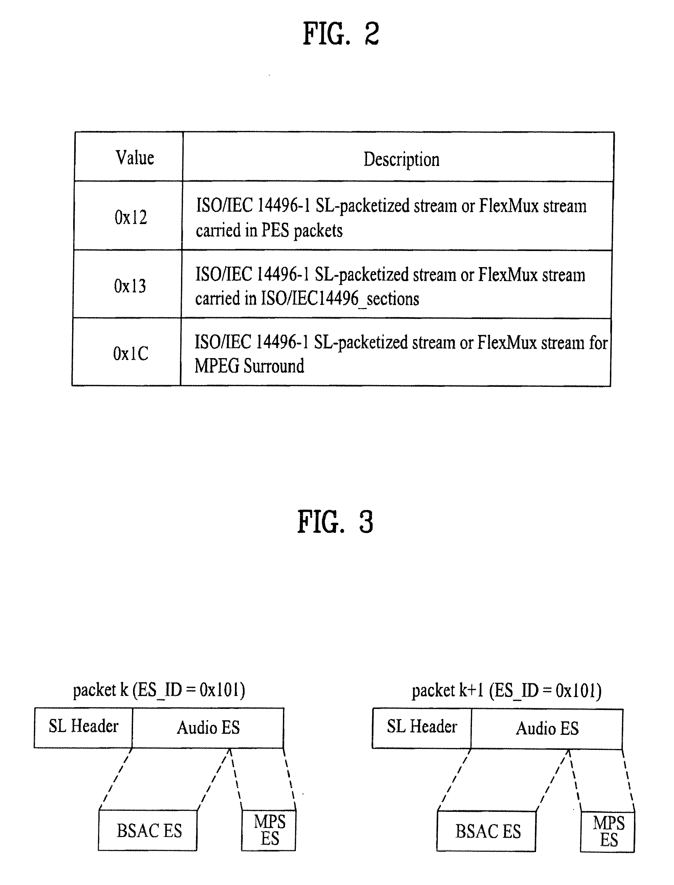

In order for a receiving system to receive and output a multi-channel audio signal correctly, the present invention is able to allocate a value uniquely capable of identifying MPEG surround audio data to a stream type value carried on the PMT. In particular, if a transported stream is an MPEG surround audio stream, as shown in FIG. 2, Ox1C is allocated to a stream value for example. The value of Ox1C is just exemplary, which may be changed into another value by a system designer.

Thus, the present invention is able to allocate a stream type value for multi-channel extension audio to performing signaling on MPEG surround audio data via PMT.

In this case, a new stream type value is allocated to MPEG surround audio data. This is to discriminate main audio data and multi-channel audio data from each other on a transport stream (TS) level. For instance, there may exist a system incapable of supporting multi-channel audio according to options of a terrestrial DMB receiving system. In this case, the main channel data is decoded only but stream type data defined as multi-channel extension audio is ignored.

FIGs. 3 to 5 are diagrams for a method of packetizing multi-channel audio data (e.g., MPS audio data) to MPEG SL according to embodiments of the present invention.

FIG. 3 shows an example for a method of packetizing MPS (MPEG surround) ES into MPEG SL by inserting the MPS ES into ancillary data (i.e., BSAC extension) field within a current audio ES.

Referring to FIG. 3, both BSAC audio ES and MPS audio ES are inserted into a payload within a single SL packet. In this case, ES_ID of each SL packet carrying audio ES has the same value (e.g., 0x101) without discrimination between the BSAC audio ES and the MPS audio ES. In this case, it is unable to discriminate the BSAC audio ES and the MPS audio ES from each other in a system layer but can be discriminated from each other by an audio decoder.

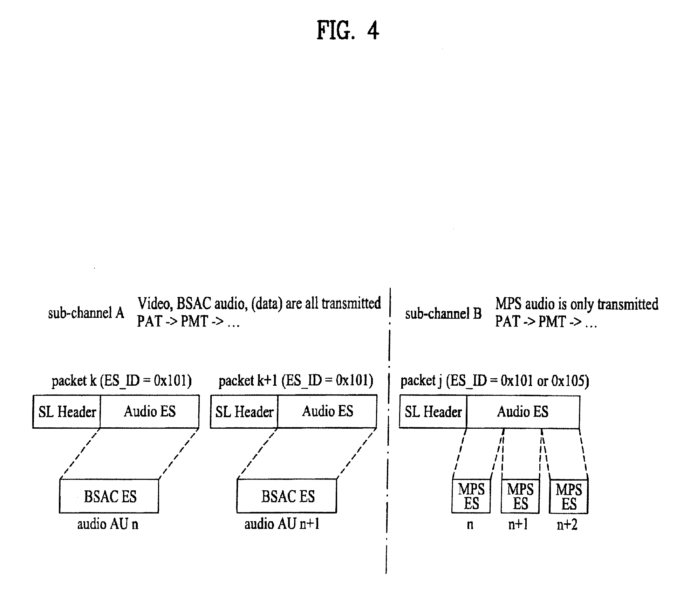

FIG. 4 shows an example for a method of assigning an independent subchannel for MPS audio ES and transmitting the MPS audio ES on the assigned subchannel.

For instance, video, BSAC audio ES and system information (e.g., PMT, PAT, etc.) are transmitted via subchannel A and MPS audio ES can be transmitted via a newly assigned subchannel B only. In this case, ES_ID of the MPS audio ES carried on the subchannel B may have the same value of or different from that of the BSAC audio ES.

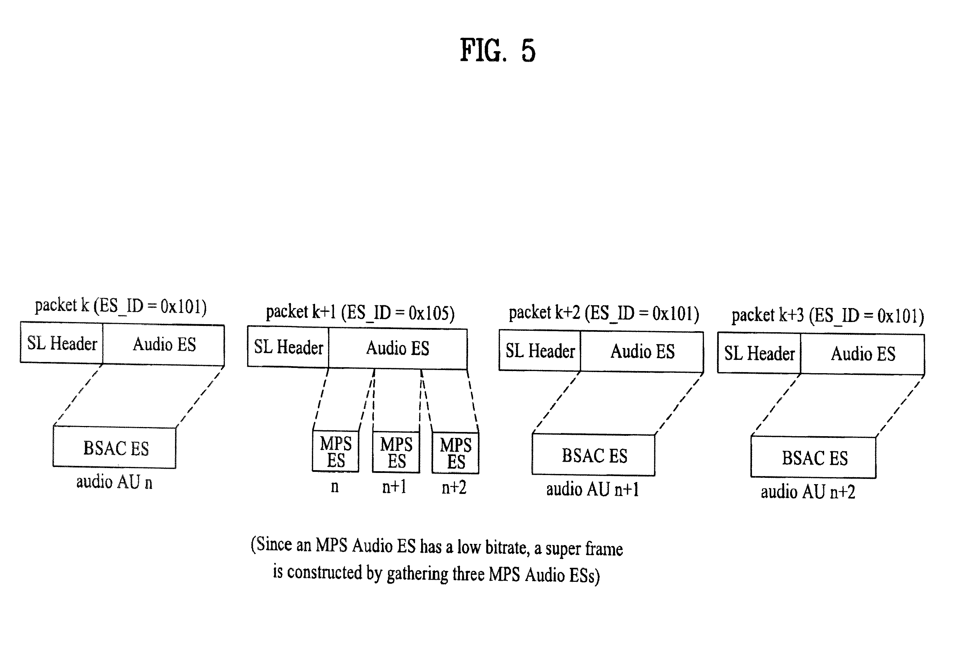

FIG. 5 shows an example for a method of assigning a separate ES_ID to MPS audio ES and transmitting it on a separate SL packet discriminated from an SL packet carrying BSAC audio ES.

First of all, assuming that ES_ID of BSAC audio ES is 0x101, a value different from 0x101, e.g., 0x105 can be allocated to ES_ID of MPS audio ES. According to one embodiment of the present invention, ES_ID not used by a conventional receiving system, i.e., a conventional terrestrial DMB receiver is allocated as ES_ID allocated to the MPS audio ES. Namely, by performing decoding not on MPS audio ES but on the BSAC audio ES (ignoring the MPS audio ES) in the conventional receiving system, inverse compatibility with the conventional receiving system can be provided.

In this case, since the MPS audio ES has a low bitrate, a super frame is constructed by gathering a plurality of MPS audio ESs. It is then able to insert the MPS audio ES into a payload within an SL packet by a unit of the constructed super frame. A basic unit of the video ES constructing the super frame is AU (access unit). And, the AU is a decoding unit of audio stream.

Referring to FIG. 5, three MPS audio ESs are gathered to construct an MPS super frame. The MPS super frame is inserted in a payload within a single SL packet. And, the AU is a decoding unit of audio stream.

In this case, a field indicating the number Aus constructing a corresponding super frame may exist in at least one of a header and payload of an SL packet or a header of the super frame.

In the following description, as shown in FIG. 5, explained is a method of receiving an audio ES in case of transmitting BSAC audio ES and MPS audio ES in a manner of allocating an independent ES_ID to each of the BSAC audio ES and the MPS audio ES.

First of all, ES_ID for an audio stream is extracted using IOD/OD. This step is optional. In particular, a value of each ES_ID of the BASC audio ES and the MPS audio ES can be determined when a transmitting side transmits an audio ES. Alternatively, a value previously fixed by agreement between the transmitting and receiving sides can be allocated to each ES_ID of the BASC audio ES and the MPS audio ES. In the latter case, it is unnecessary to parse IOD/OD to extract ES_ID for an audio stream.

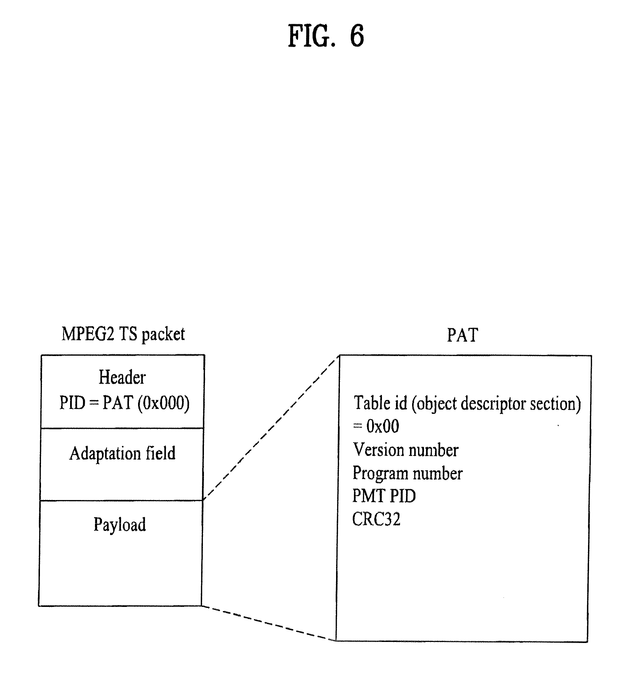

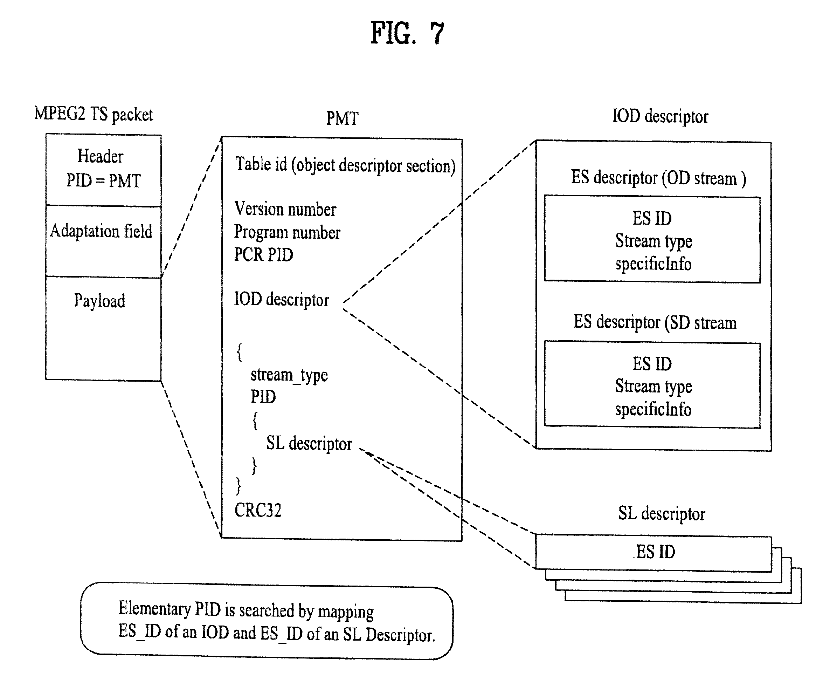

In the following description, explained is a data parsing process for 5.1-channel audio service constructed with BSAC and MPEG surround audio data in a receiving system using FIG. 6, FIG. 7 and IOD/OD.

First of all, a transmitting side sends a program association table (PAT) of MPEG-2 TS and an initial object descriptor (IOD) of MPEG-4 system standard by carrying them within a multiplexed stream. In this case, the IOD is included in a program map table (PMT) of the MPEG-2 TS.

The PAT provides PID information of TS packet containing information of program. The PAT is a special information carried on a packet having PID=0x00, describes an element of a program for each program number, and indicates a PID of a transport packet carrying a program map table PMT).

In particular, it is able to obtain a program number and PID of PMT by parsing a payload of a TS packet of which PID is 0x00.

The PMT acquired from the PAT provides correlations between elements constructing a program. In this case, since terrestrial DMB transmits MPEG-4 content, IOD is included in the PMT. Hence, IOD descriptor information included within the PMT is extracted. And, PID for each ES is searched via mapping between ES_ID of a corresponding ES descriptor included in the extracted IOD descriptor and ES_ID of an SL descriptor.

In case that the ES descriptor is a descriptor for an audio stream, the ES descriptor is transmitted in a manner of including DecoderConfigDescriptor field containing coding characteristics (profile, etc.) of audio. In this case, the DecoderConfigDescriptor field is separately defined for ES (or SL) to which main channel codec and subchannel codec correspond. The DecoderConfigDescriptor field includes a stream type field indicating a type of a transported stream, an objectTypeIndication field indicating a type of an object, and a Decoderspecific info field indicating decoding information on each stream.

In particular, when MPEG-4 compressed and coded multimedia is packetized into MPEG-2 TS, IOD and SL (sync layer) descriptors defined by MPEG-4 are included in the PMT syntax. In this case, the IOD descriptor is included in a descriptor() region of a first loop and the SL descriptor is included in a descriptor() region of a second loop.

The IOD, as shown in FIG. 7, indicates profile and level information of the transmitted MPEG-4 content. And, the IOD includes ES (elementary stream) ID information of an OD stream and ES ID information of SD (scene description) stream. In particular, information on the OD stream and information on the SD stream are described in the ES_descriptor field of the IOD.

The IOD plays a role as a pointer for connecting BIFS of SD to OD. Hence, if the IOD is interpreted, it is able to obtain a logical channel ES_ID that carries information on scene description and information on each object.

Subsequently, a scene is configured by accessing each logical channel, information on each object is obtained, and a logical channel relevant to audio or video can be then obtained.

The second loop of the PMT includes a stream_type field capable of discriminating whether a packetized stream in SL is transmitted in a PES (packetized elementary stream) type or a section type, PID (elementary_PID) field of each stream and ES ID information of a corresponding PID. Hence, if the PMT information is interpreted, it is able to obtain information of all programs carried on TS. And, it is also able to obtain PID information on each ES configuring a corresponding program.

For instance, if an independent ES_ID is allocated to each of the BSAC audio ES and the MPS audio ES and is then received, it is able to extract PID of each of the BSAC audio ES and the MPS audio ES via the PMT.

Using the extracted PIDs of the BSAC audio ES and the MPS audio ES, it is able to perform filtering on MPEG-4 SL packet containing the BSAC audio ES (i.e., main audio ES) and MPEG-4 SL packet containing the MPS audio ES. ES inserted in a payload of each of the filtered MPEG-4 SL packets is outputted to a corresponding decoder.

In particular, the BSAC audio ES is outputted to the decoder capable of decoding a main audio stream, while the MPS audio ES is outputted to the decoder capable of decoding an MPEG surround audio stream.

For this, the receiving system according to the present invention includes a multi-channel audio decoder. And, the multi-channel audio decoder includes a BSAC decoder for example.

In this case, the BSAC audio ES corresponding to the main audio ES is outputted to the BSAC decoder within the multi-channel audio decoder and the MPS audio ES is outputted to the multi-channel audio decoder. The BSAC decoder decodes the BSAC audio ES by BSAC decoding scheme and then reconstructs a mono or stereo audio signal. The multi-channel audio decoder reconstructs the multi-channel audio signal by decoding the MPS audio ES outputted from the SL de-packetizer based on the mono or stereo signal reconstructed by the BSAC decoder.

The multi-channel audio decoder synchronizes the BSAC audio signal and the MPS audio signal using CUTS (composition time stamp). In particular, the multi-channel audio decoder matches synchronization between the two signals using the time stamp of the BSAC audio signal and the time stamp of the MPS audio signal. In this case, the time stamp of the MPS audio signal means the stamp for an initial MPS AU within a super frame.

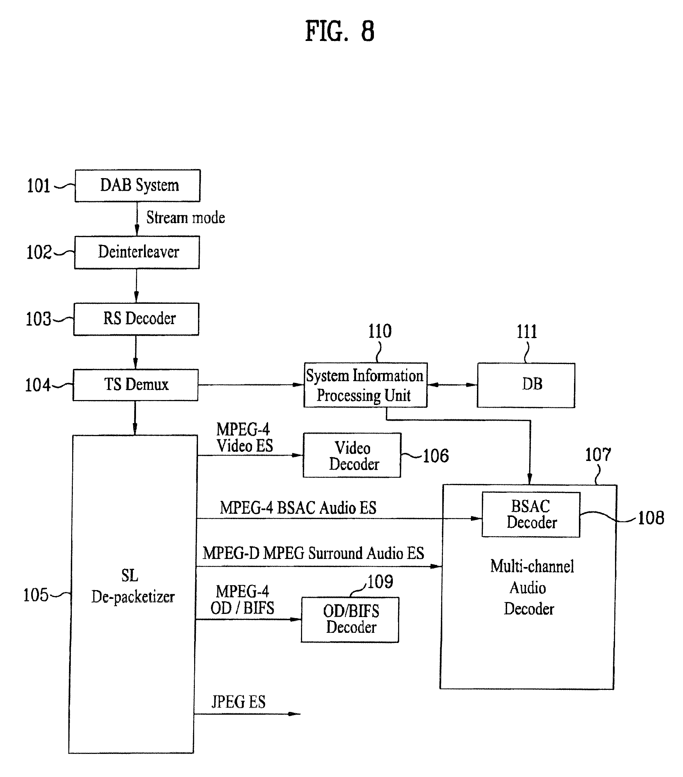

FIG. 8 is a block diagram of a receiving system for receiving and outputting multi-channel audio data according to one embodiment of the present invention. Specifically, FIG. 8 is effective if applied to the case of transmission by allocating the independent ES_ID to each of the BSAC audio ES and the MPS audio ES, as shown in FIG. 5.

Referring to FIG. 8, a receiving system for receiving and outputting multi-channel audio data according to one embodiment of the present invention includes a DAB system 101, a deinterleaver 102, an RS decoder 103, a TS demux 104, an SL de-packetizer 105, a video decoder 106, a multi-channel audio decoder 107, an OD/BIFS decoder 109, a system information processing unit 110, and a storage unit (DB) 111. In particular, the multi-channel audio decoder 107 includes a BSAC decoder 108.

For clarity and explanation of the present invention, the group consisting of the DAB system 101, the deinterleaver 102 and the RS decoder 103 shall be called a receiving unit. And, the group consisting of the TS demux 104 and the SL de-packetizer 105 shall be called a de-packetizing unit. If the receiving system is the conventional terrestrial DMB receiver, BSAC audio data is decoded and outputted by the BSAC decoder 108 of the multi-channel audio decoder 107 only.

The DAB system 101 can include a tuner, a baseband signal processing unit (not shown in the drawing). The baseband signal processing unit can include an analog/digital (A;D) converter, a synchronizer, an OFDM demodulator, a deinterleaver, a viterbi decoder and an audio decoder (not shown in the drawing). The audio decoder within the baseband signal processing unit decodes and outputs conventional DAB audio data. For instance, the audio decoder decodes DAB audio signal by MUSICAM (masking pattern adapted universal subband integrated coding and multiplexing) and then outputs the decoded signal.

If the data processed by the DAB system 101 is the data transported in a stream mode, a data stream is outputted to the deinterleaver 102 shown in FIG. 8, is deinterleaved by the deinterleaver 102, and is then outputted to the RS decoder 103.

The RS decoder 103 performs additional error correction on the data stream and then outputs the error-corrected data stream to the TS demux 104.

The TS demux 104 extracts MPEG-4 SL packet by performing transport stream depacketizing and PES (packetized elementary stream) depacketizing on the error-corrected data stream and then outputs the MPEG-4 SL packet to the SL de-packetizer 105. The TS demux 104 outputs system information extracted through the transport stream depacketizing to the system information processing unit 110. In this case, the system information can include PAT, PMT and the like.

For instance, if the BSAC audio ES and the MPS audio ES are transmitted by allocating independent ES_ID to each of the BSAC audio ES and the MPS audio ES, a payload of the MPEG-4 SL packet extracted by the TS demux 104 includes one of video ES, BSAC audio ES, MPS audio ES, OD/BIFS ES and JPEG ES.

The SL de-packetizer 105 performs SL (sync layer) depacketizing on the MPEG-4 SL data PES-depacketized by the IS demux 104. If the data extracted from the payload of the SL packet according to the SL depacketizing is the BSAC audio ES, it is outputted to the BSAC decoder 108 of the multi-channel audio decoder 107. If it is the MPS audio ES, it is outputted to the multi-channel audio decoder 107. If it is the video ES, it is outputted to the video decoder 106. If it is the OD/BIFS ES, it is outputted to the OD/BIFS decoder 109. Since the video decoder 106 and the OD/BIFS decoder 109 are not the features of the present invention, their details are omitted in the following description to refer to the public-known technologies.

The system information processing unit 110 extracts PMT PID from the PAT in the system information to control the transport stream depacketizing of the TS demux 104 and the sL depacketizing of the SL de-packetizer 105. The system information processing unit 110 extracts the IOD descriptor and the SL descriptor by parsing the PMT corresponding to the extracted PMT PID. The system information processing unit 110 searches PIDs of the respective ESs through mapping between the ES_ID of the corresponding ES descriptor included in the extracted IOD descriptor and the ES_ID of the SL descriptor.

For instance, if the BSAC audio ES and the MPS audio ES, as shown in FIG. 5, are received in a manner of allocating the independent ES_ID to each of the BSAC audio ES and the MPS audio ES, it is able to extract the PID of the BSAC audio ES and the PID of the MPS audio ES through the PMT.

By outputting the extracted PIDs of the BSAC audio ES and the MPS audio ES to the TS demux 104 and the SL de-packetizer 105, it is able to filter the MPEG-4 SL packet including the BSAC audio ES and the MPEG-4 SL packet including the MPS audio ES, respectively. The corresponding ES included in the payload of each of the filtered MPEG-4 SL packets is outputted to the corresponding decoder. In particular, the BSAC audio ES is outputted to the BSAC decoder 108 within the multi-channel audio decoder 107, while the MPS audio ES is outputted to the multi-channel audio decoder 107.

The BSAC decoder 108 within the multi-channel audio decoder 107 reconstructs a mono or stereo audio signal by decoding the BSAC audio ES outputted from the SL de-packetizer 105 based on audio codec information outputted from the system information processing unit 110.

The multi-channel audio decoder 107 reconstructs a multi-channel audio signal by decoding the MPS audio ES outputted from the SL de-packetizer 105 based on the mono or stereo audio signal reconstructed by the BSAC decoder 108 and audio codec information outputted from the system information processing unit 110. In dong so, the multi-channel audio decoder 107 matches the synchronization between the BSAC audio signal and the MPS audio signal using CTS (composition time stamp). In particular, using the time stamp of the BSAC audio signal and the time stamp of the MPS audio signal, the synchronization between the two signals is matched. In this case, the time stamp of the MPS audio signal means the stamp for the initial MPS AU within the super frame.

In case that the ES descriptor parsed by the system information processing unit 110 is the descriptor for the audio stream, the ES descriptor is received by including DecoderConfigDescriptor field including the information on coding characteristics (e.g., profile, etc.) of audio. The audio codec information parsed from the DecoderConfigDescriptor field is stored in the storage unit 111 or is outputted to the multi-channel audio decoder 107 for the decoding of the multi-channel audio signal. In this case, information on main channel codec and subchannel codec included in the DecoderConfigDescriptor field is separately defined for the corresponding ES (or, SL). The DecoderConfigDescriptor field can include a stream_type field indicating a type of a transported stream, an objectTypeIndication field indicating a type of an object, a Decoderspecific info filed indicating decoding information on each stream, and the like.

As mentioned in the foregoing description, in order to support the multi-channel audio service, ES_ID and OD_ID need to be defined and the DecoderconfigDescriptor field needs to be defined for the codec information on the MPS audio signal as well. In order to optimize a TS rate in transmitting the MPS audio signal as an independent ES, it is able to use a super frame structure.

In the following description, explained is a process for obtaining audio codec information on an MPS audio signal in a manner of paging AduioSpecificConfig() to DecoderConfigDescriptor field and using SpatialSpecificConfig() included in the paged AudioSpecificConfig().

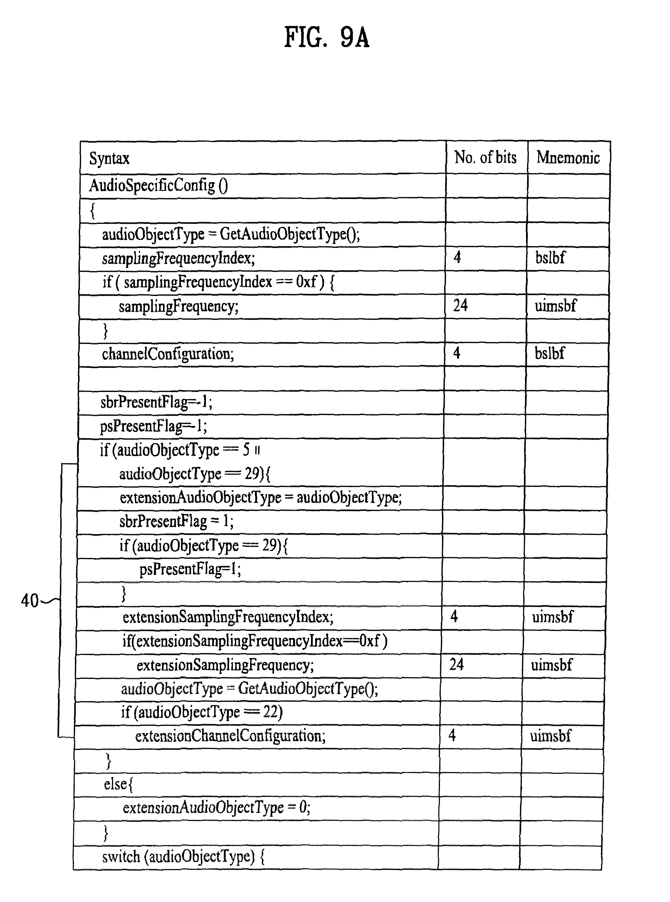

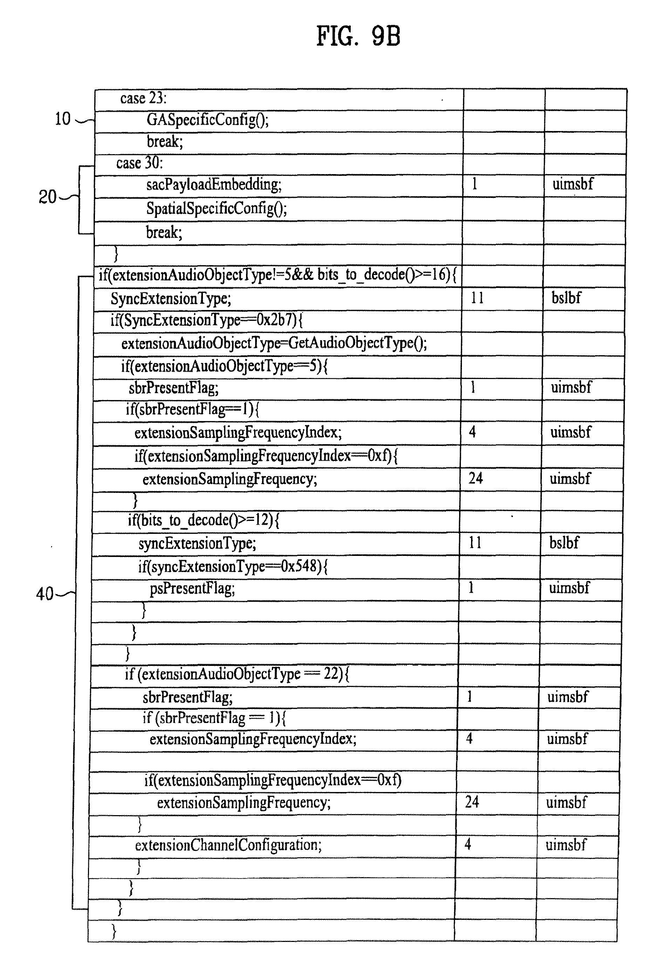

FIGS. 9 to 23 show a syntax structure of AudioSpecificConfig paged to DecoderConfigDescriptor field to support a multi-channel audio service according to one embodiment of the present invention.

In this case, ES carrying spatial audio data is identified by the Audio Object Type "MPEG Surround" for example. In particular, '30' is allocated to the Audio Object Type ID of MPEG surround and '22' is allocated to Audio Object Type ID of BSAC, for example.

The AudioSpecificConfig() for this object carries the SpatialSpecificConfig() data and a sacPayloadEmbedding flag that indicates whether the SpatialFrame() payload is conveyed as an elementary stream or embedded into the downmix data. In particular, data corresponding to SpatialSpecificConfig() in the AudioSpecificConfig() is carried on the DecoderConfigDescriptor.

Each MPS audio ES is packed by the syntax SpatialFrame() and is transmitted by a packetizing process of SL→PES→TS. If the MPS audio ES, as shown in FIG. 5, is transmitted, ES_ID of the MPS audio ES has a value different from that of ES_ID of the BSAC audio ES.

As a size of the SpatialFrame() is too small, it is able to use the super frame structure to efficiently hold in TS trunk. In this case, if a plurality of MPS audio ESs are embedded into a single SL packet, it is unnecessary to define the syntax called a super frame. Besides, there exist a plurality of BSAC audio ESs corresponding to a single MPS SL. Hence, the number of BSAC-packetized SLs may not match the number of MPS-packetized SLs but there can exist a multiple relation in-between.

In this case, a descriptor for BSAC audio is discriminated from that for MPS audio according to ObjectType ID. In FIGs. 9 to 23, a data field existing within DecoderConfigDescriptor for BSAC audio is represented as '10', a data field existing within DecoderConfigDescriptor for MPS audio is represented as 20, and a data filed in common is represented as '30'.

In case that BSAC+MPS, as shown in FIG. 4, is transmitted by being combined into a single audio ES, it is able to transmit descriptor information on BSAC and MPS audios together with a single AudioSpecificeonfig() via a content relevant to extensionAudioObjectType of AudioSpecificeonfig (). A field used for this is represented as 40. Hence, in case that BSAC audio Es and MPS audio ES are transmitted by allocating separate ES_ID to each of the BSAC audio ES and the MPS audio ES, The field relevant to the sign 40 used in FIGs. 9 to 23 can be omitted

In particular, AudioSpecificeonfig () descriptor shown in FIG. 9A or FIG. 9B pages GASpecificConfig() descriptor in case of BSAC audio or SpatialSpecificConfig() descriptor in case of MPS audio, according to Object Type ID.

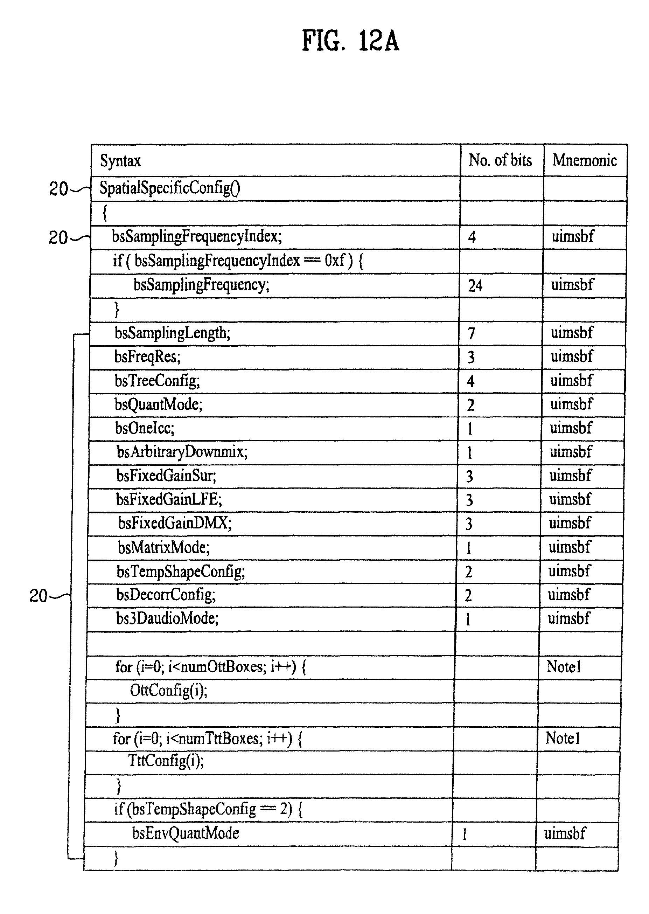

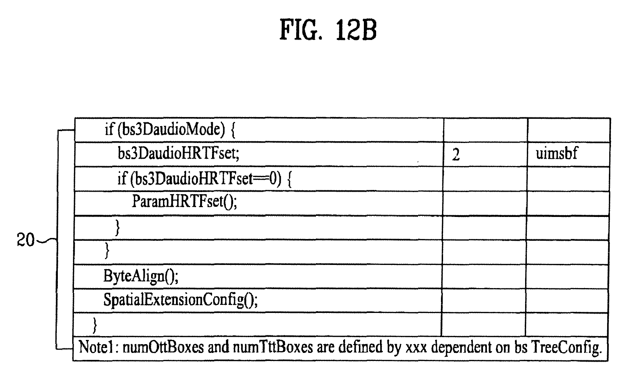

In this case, a samplingFrequencyIndex field value in the AudioSpecificConfig() descriptor for the MPS audio is unable to differ fro a samplingFrequencyIndex field value for the BSAC audio. In the AudioSpecificConfig() descriptor for the MPS audio, channelConfiguration is meaningless. And, a bsSamplingFrequencyIndex field value in the Spatial-SpecificConfig() descriptor for the MPS audio in FIG. 12A or FIG. 12B is unable to differ from a samplingFrequencyIndex field value on the AudioSpecificConfig() descriptor of the MPS and BSAC audios. Hence, it is able to define one of the overlapped data to be ignored.

Value of bsFrameLength in the SpatialSpecificConfig() descriptor should be configured to indicate a multiple of 1024 samples that is a frame size of the BSAC audio. And, it is able to use the MPS frame concept using this information. It is able to define maximum 8192 samples as a single MPS frame, which corresponds to eight BSAC frames. In case of using this field, a single MPS frame has the concept of corresponding to several BSACs. In this case, in order to make a plurality of BSAC frames (ES) correspond to a single MPS frame, identifier indicating a relation in-between, sync information, timing information or the like may be necessary.

For target application, operational ranges of several parameters within SpatialSpecificConfig() shown in FIG. 12A or FIG. 12B can be restricted. For instance, a bsTreeConfig field value is restricted not to support multi-channel modes over 5.1 channel or a value of bsArbitraryDownmix, bsMatrixMode, bs3DaudioMode or the like can be limited to a specific value.

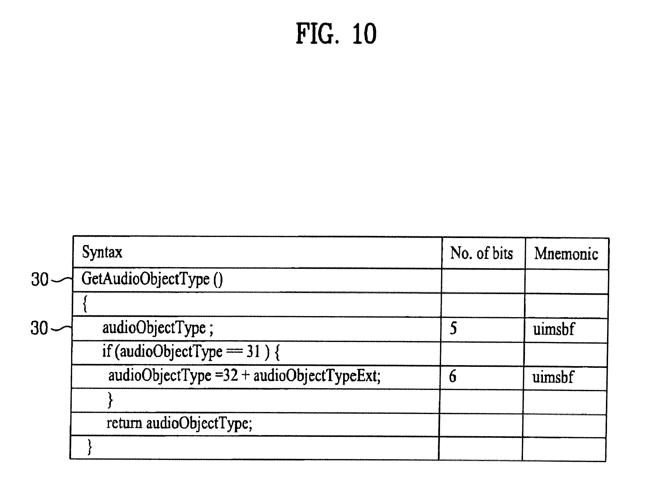

FIG. 10 is a diagram of GetAudioObjectType() syntax structure, which is paged by the AudioSpecificConfig() descriptor shown in FIG. 9, according to one embodiment of the present invention.

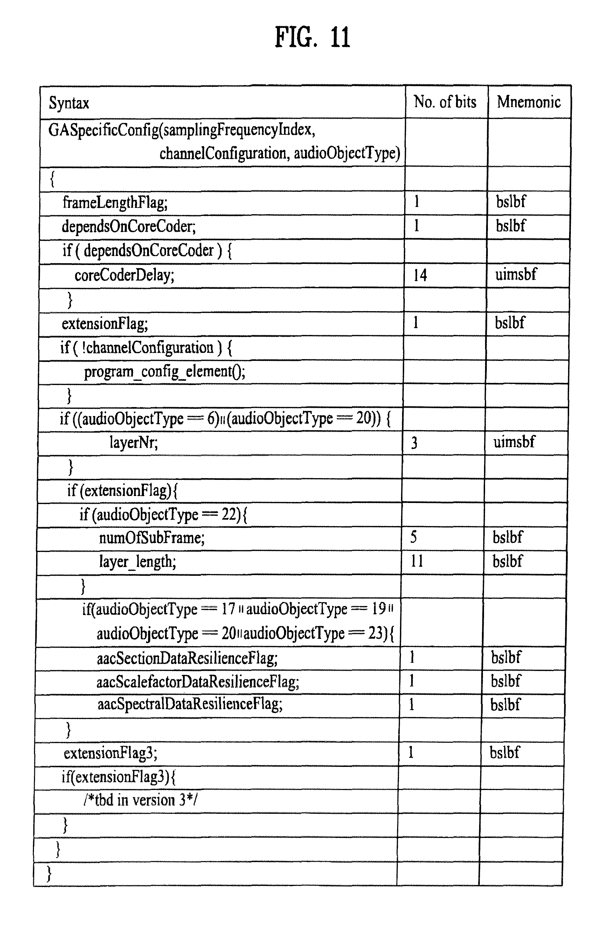

FIG. 11 is a diagram of GASpecificConfig syntax structure for BSAC audio, which is paged if ObjectType ID of the AudioSpecificConfig() descriptor shown in FIG. 9 is 23, according to one embodiment of the present invention. Details of the respective field are omitted by referring to the known technologies.

FIG. 12A and FIG. 12B are diagrams of SpatialSpecificConfig syntax structure for MPS audio, which is paged if ObjectType ID of the AudioSpecificConfig() descriptor shown in FIG. 9 is 30, according to one embodiment of the present invention.

Referring to FIG. 12A and FIG. 12B, bsSamplingFrequencyIndex field indicates a sampling frequency obtainable according to a table in ISO/IEC 14496-4. In this case, a sampling frequency of MPS audio is unable to differ from a sampling frequency of BSAC audio.

A bsSamplingFrequency field is used to indicate a sampling frequency that is not represented as a table. Since terrestrial DMB is limited to three specific sampling frequencies, it is able to omit the bsSamplingFrequency field in the present invention.

A bsFrameLength field represents an audio frame length by a slot unit. In this case, 1 slot means 64 time sample. In a spatial frame, the number of time slots (=numSlots) is defined as Formula 1.

[Formula 1]

numSlots = bsFrameLength+1

According to one embodiment of the present invention, 1024 samples and 2048 samples are supported only. In particular, 16 or 32 slots are supported only for example.

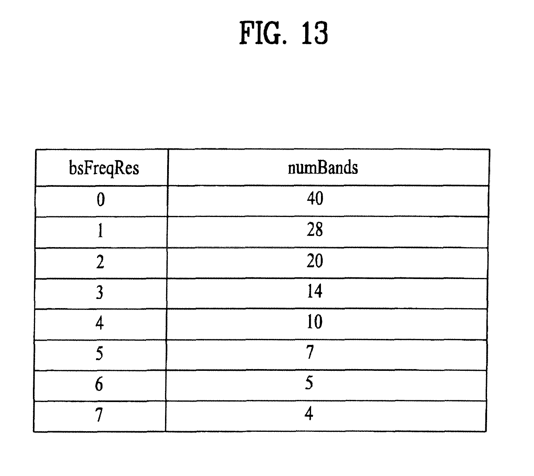

A bsFreqRes field indicates a frequency resolution for determining a transmitted number of MPS parameters. For example, the number of parameter bands is determined according to FIG. 13.

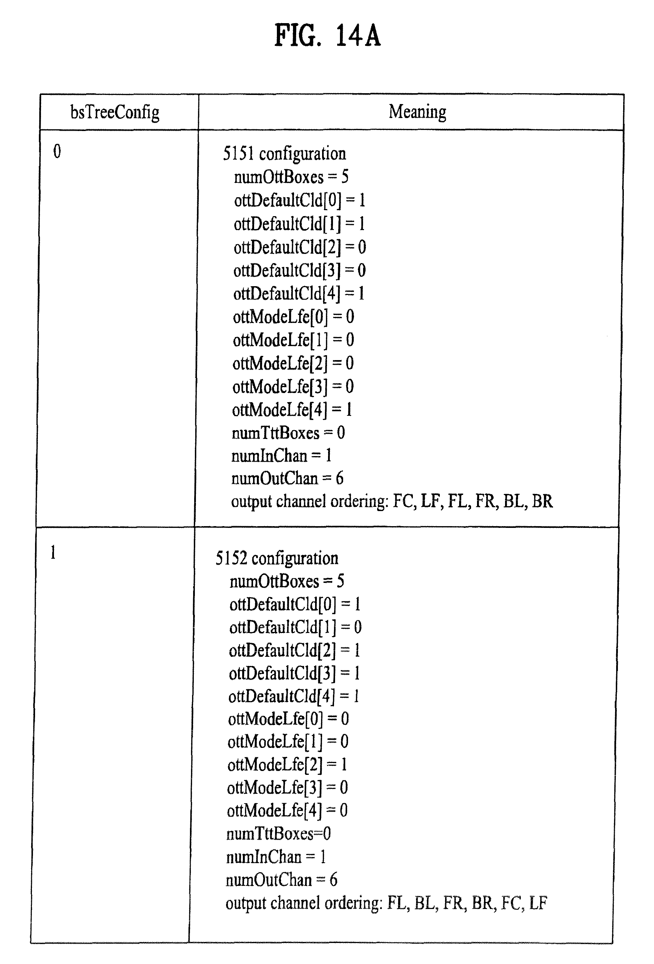

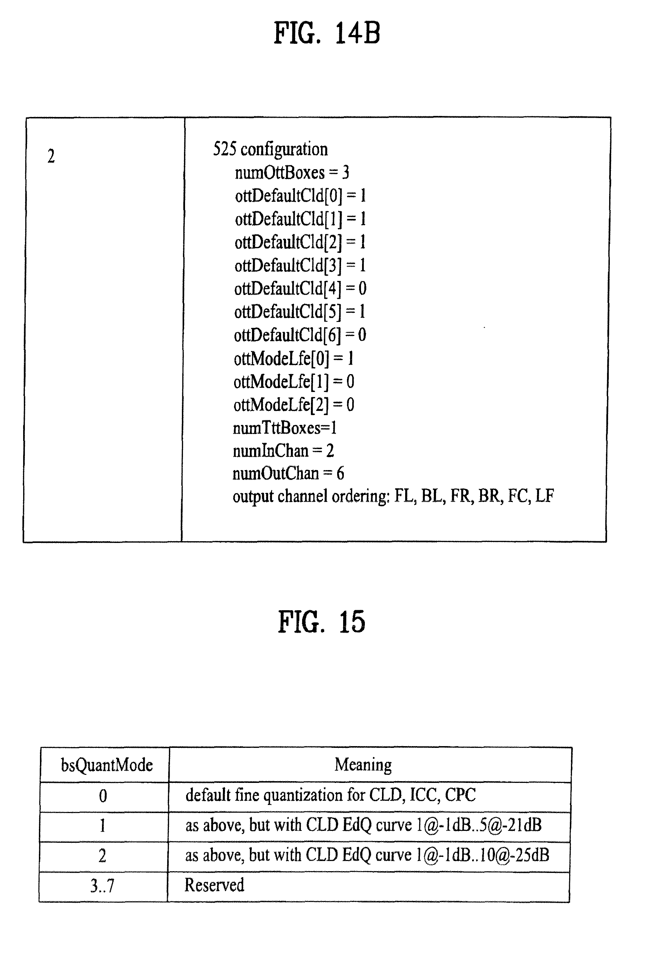

A bsTreeConfig field describes a scheme for upmixing a multi-channel signal from an audio signal downmixed into a mono or stereo signal. In particular, the bsTreeConfig field defines an upmixing scheme. A value of the bsTreeConfig field can be determined according to FIG. 14A or FIG. 14B.

A bsQuantMode field indicates a mode for determining CLD quantization. In particular, it is able to use a quantizing scheme by applying a different curve in quantizing CLD. And, the bsQuantMode field indicates a mode for determining this. Namely, it is able to define quantization and CLD energy-dependent quantization (EdQ) according to FIG. 15.

A bsOneIcc field indicates whether an ICC value in MPS parameters is used as a single value for a whole frequency band.

A bsArbitraryDownmix field indicates whether arbitrary downmix gain information is transmitted.

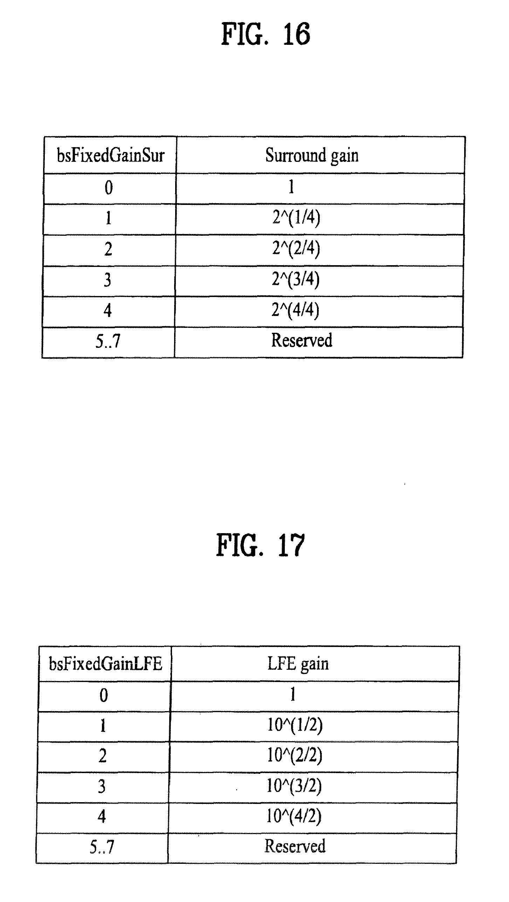

A bsFixedGainsSur field indicates a gain value for a surround channel. It is able to define a gain value used for surround channel according to FIG. 16.

A bsFixedGainsLFE field indicates a gain value for LFE channel. It is able to define a gain value used for LFE channel according to FIG. 17.

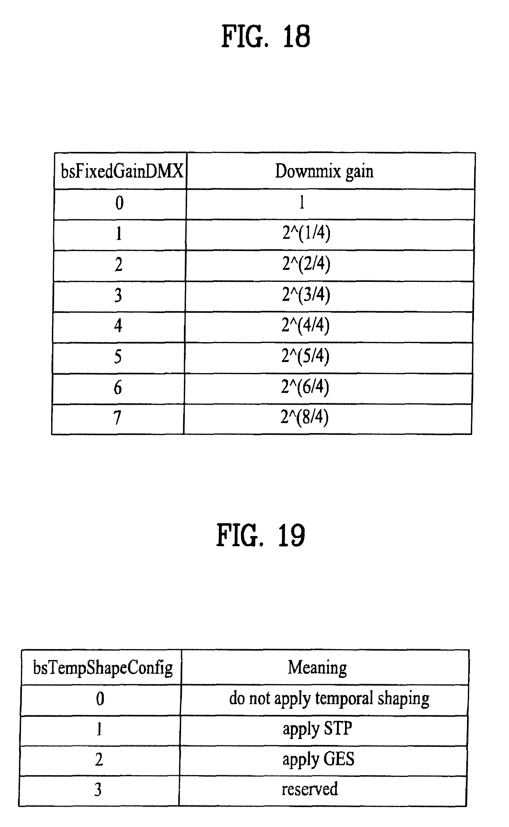

A bsFixedGainsDMX field indicates a gain value for downmix. It is able to define a gain value used for downmix according to FIG. 18.

A bsMatrixMode field indicates whether a downmix scheme is matrix compatible stereo downmix.

A bsTempShapeConfig field indicates a tool applied to such a decoding process as temporal shaping. It is able to indicate an operational mode of temporal shaping (STP or GES) according to FIG. 19.

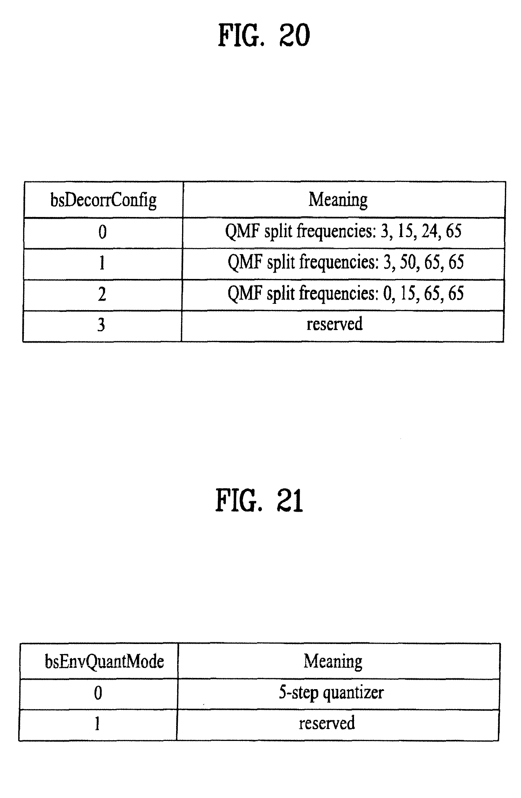

A bsDecorrConfig field indicates what kind of configuration is used in using a decorrelator in an upmix process. It is able to indicate an operational mode of the decorrelator in a decoder according to FIG. 20.

A bs3DaudioMode field indicates whether a stereo downmix is in 3D audio mode.

A bsEnvQuantMode field indicates a quantizing method for an envelop shape according to FIG. 21.

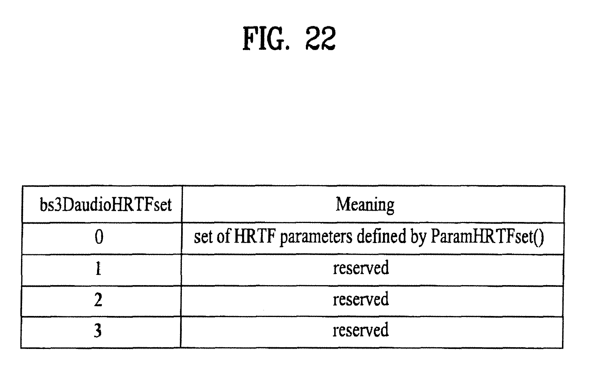

A bs3DaudioHRTFset field indicates a set type of HRTF parameters used in the 3D audio mode. It is able to indicate the HRTF set according to FIG. 22.

OttConfig(i) indicates a syntax containing config information relevant to Ott (One-To-Two Box) parameter transmission.

TttConfig(i) indicates a syntax containing config information relevant to ttt (Two-To-Three Box) parameter transmission.

SpatialExtensionConfig() indicates a syntax containing config information on side information selectively transmitted if necessary.

Meanwhile, each MPS audio ES is packed by such a syntax as SpatialFrame(), which is transmitted by a packetizing process of SL→PES→TS.

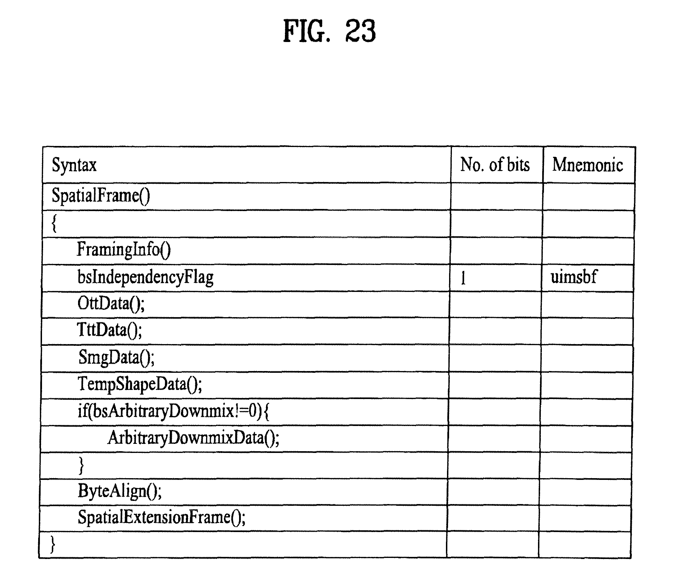

FIG. 23 is a diagram of SpatialFrame() syntax structure according to one embodiment of the present invention.

Referring to FIG. 23, FramingInfo () indicates per-frame side information required for packing a frame.

A bsIndependencyFlag field is a flag that indicates whether a current frame is independently decodable. Of a value of this field is 0, decoding is possible only if previous frame information is provided.

OttData() carries parameter information required for OTT data decoding.

TttData() carries parameter information required for TTT data decoding.

SmgData() carried parameter information required for smoothing data decoding.

TempShapeData() carries parameter information required for Temporal Shaping data decoding.

ArbitraryDownmixData() carries side information for reconstructing Arbitrary Downmix.

SpatialExtensionFrame() carries side parameter information for additionally transmitting side parameters such as Residual and the like.

An example for NewConfigDescriptor() syntax structure of the present invention is shown as follows.
NeweonfigDescriptor()
{
bsAudioContentsTypeInfo;
bsAudioContentsTypeExtensionInfo;
bsRenderingGuideInfoj
bsDownmixMode;
}

The bsAudioContentsTypeInfo field indicates a type of a transmitted audio content. For instance, this field identifies such a genre as news, drama, movie, sports, music, and the like. This field is combined with bsAudioContetnsTypeExtensionInfo field and indicates information by details of music in order of classic, rock, concert, choir, jazz, pop, ....

The multi-channel audio decoder 107 utilizes this information to perform an appropriate tone control as well as an appropriate re-distribution of 5.1-channel decoded signal. Moreover, this information is usable to information a user of information via EPG (Electronic Program Guide) or OSD (On Screen Display).

The bsRenderingGuideInfo field plays a role in informing the multi-channel audio decoder 107 of a preferable mode in binaurally rendering a transmitted multi-channel content or downmixing the content into 4.0 channel like vehicle environment. Similarly, bsDownmixMode can be transmitted.

This becomes useful information by considering a fact that an MPS used environment is a vehicle. Configuration information for mapping 5.1 channel to 4.0 channel or gain term required for a downmix process and the like can be carried on this field.

For instance, downmix is performed using a different gain as follows:

If bsDownmixMode = 0,

$$Lout = L * 1.0 + C * 0.5 + LFE * 0.5$$

$$Rout = C * 0.5 + R * 1.0 + LFE * 0.5$$

$$Lsout = Ls * 1.0$$

$$Rsout = Rs * 1.0;$$

and
If bsDownmixMode = 1,

$$Lout = L * 0.7 + C * 0.7 + LFE * 0.7$$

$$Rout = C * 0.7 + R * 0,7 + LFE * 0.7$$

$$Lsout = L * 0.2 + Ls * 0.9$$

$$Rsout = R * 0.2 + Rs * 0.9.$$

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

**Claims**

1.  A receiving system for receiving and processing audio signal for mobile broadcast service, comprising:

    a receiving unit (101,102,103) receiving a mobile broadcast signal including a first audio signal, a second audio signal for multi-channel and system information;
    a de-packetizing unit (104,105) identifying the first and second audio signals included in the mobile broadcast signal received by the receiving unit with reference to identification information allocated to each of the audio signals; and
    a multi-channel audio decoder (107) reconstructing a multi-channel audio signal by decoding the first audio signal identified and outputted by the de-packetizing unit based on inputted audio codec information and decoding the second audio signal identified and outputted by the de-packetizing unit based on the decoded first audio signal and the audio codec information.

2.  The receiving system of claim 1, further comprising a system information processing unit (110) extracting identification information for identifying the first audio signal and the second audio signal from the system information included in the mobile broadcast signal received by the receiving unit, the system information processing unit outputting the extracted identification information to the de-packetizing unit, the system information processing unit extracting the audio codec information for decoding the first audio signal and the second audio signal, the system information processing unit outputting the extracted audio codec information to the multi-channel audio decoding unit

3.  The receiving system of claim 2, wherein the system information processing unit extracts the identification information allocated to each of the first and second audio signals with reference to an IOD descriptor and SL descriptor of a program map table (PMT) in the system information.

4.  The receiving system of claim 1, wherein the first audio signal comprises a BSAC audio signal and wherein the second audio signal comprises an MPEG surround signal.

5.  The receiving system of claim 1, wherein the first audio signal and the second audio signal are received in a manner that an independent ES_ID is allocated as the identification information to each of the first and second audio signals.

6.  The receiving system of claim 5, wherein after the first audio signal and the second audio signal have been packetized into different SL packets, respectively, the first and second audio signals are received in a manner that PES packetization and TS packetization are sequentially performed on the SL packets.

7.  The receiving system of claim 6, wherein a second audio elementary stream (ES) is multiplexed with a payload of an SL packet corresponding to the second audio signal by at least one access unit (AU) and is then received.

8.  A method of processing data in a receiving system for receiving and processing audio signal for mobile broadcast service, comprising the steps of:

    receiving a mobile broadcast signal including a first audio signal, a second audio signal for multi-channel and system information;
    identifying the first and second audio signals included in the received mobile broadcast signal with reference to identification information allocated to each of the audio signals; and

reconstructing a multi-channel audio signal by decoding the first audio signal identified in the identifying step based on inputted audio codec information and decoding the second audio signal identified in the identifying step based on the decoded first audio signal and the audio codec information.

9. The method of claim 8, further comprising the step of extracting identification information for identifying the first audio signal and the second audio signal from the system information included in the received mobile broadcast signal, outputting the extracted identification information to the identifying step, extracting the audio codec information for decoding the first audio signal and the second audio signal, outputting the extracted audio codec information to the multi-channel audio reconstructing step

10. The method of claim 9, wherein the information extracting step comprises the step of extracting the identification information allocated to each of the first and second audio signals with reference to an IOD descriptor and SL descriptor of a program map table (PMT) in the system information.

11. The method of claim 8, wherein the first audio signal comprises a BSAC audio signal and wherein the second audio signal comprises an MPEG surround signal.

12. The method of claim 8, wherein the first audio signal and the second audio signal are received in a manner that an independent ES_ID is allocated as the identification information to each of the first and second audio signals.

13. The method of claim 12, wherein after the first audio signal and the second audio signal have been packetized into different SL packets, respectively, the first and second audio signals are received in a manner that PES packetization and TS packetization are sequentially performed on the SL packets.

14. The method of claim 8, wherein after the first audio signal and the second audio signal have been packetized into a single SL packet, the SL packet is received in a manner that PES packetization and TS packetization are sequentially performed on the SL packet.

15. The method of claim 8, wherein the first audio signal and the second audio signal are received on different subchannels, respectively.

# FIG. 1

MPEG-4 SL

| SL Header | Audio ES | | SL Header | Video ES |
|-----------|----------|--|-----------|----------|

MPEG-2 TS

| Audio PES | | Video PES | |
|-----------|--|-----------|--|
| Header | TS Payload | Header | TS Payload |

Reed-Solomon Code

| Header | TS Payload | RS 16 byte | Header | TS Payload | RS 16 byte |
|--------|------------|------------|--------|------------|------------|

Convolutional Deinterleaver

| Header | Byte interleaved Data | Header | Byte interleaved Data |
|--------|----------------------|--------|----------------------|

| Sub-Channel |
|-------------|

# FIG. 2

| Value | Description |
|-------|-------------|
| 0x12 | ISO/IEC 14496-1 SL-packetized stream or FlexMux stream carried in PES packets |
| 0x13 | ISO/IEC 14496-1 SL-packetized stream or FlexMux stream carried in ISO/IEC14496_sections |
| 0x1C | ISO/IEC 14496-1 SL-packetized stream or FlexMux stream for MPEG Surround |

# FIG. 3

packet k (ES_ID = 0x101)

| SL Header | Audio ES |
|-----------|----------|

| BSAC ES | | MPS ES |

packet k+1 (ES_ID = 0x101)

| SL Header | Audio ES |
|-----------|----------|

| BSAC ES | | MPS ES |

# FIG. 4

sub-channel A    Video, BSAC audio, (data) are all transmitted
PAT -> PMT -> ...

sub-channel B    MPS audio is only transmitted
PAT -> PMT -> ...

packet k (ES_ID = 0x101)      packet k+1 (ES_ID = 0x101)      packet j (ES_ID = 0x101 or 0x105)

| SL Header | Audio ES | | SL Header | Audio ES | | SL Header | Audio ES |

| BSAC ES | | BSAC ES | | MPS ES | MPS ES | MPS ES |

audio AU n      audio AU n+1      n   n+1   n+2

# FIG. 5

packet k (ES_ID = 0x101)

| SL Header | Audio ES |
|---|---|

BSAC ES

audio AU n

packet k+1 (ES_ID = 0x105)

| SL Header | Audio ES |
|---|---|

| MPS ES | MPS ES | MPS ES |
|---|---|---|

n     n+1     n+2

packet k+2 (ES_ID = 0x101)

| SL Header | Audio ES |
|---|---|

BSAC ES

audio AU n+1

packet k+3 (ES_ID = 0x101)

| SL Header | Audio ES |
|---|---|

BSAC ES

audio AU n+2

(Since an MPS Audio ES has a low bitrate, a super frame
is constructed by gathering three MPS Audio ESs)

EP 2 093 911 A2

# FIG. 6

MPEG2 TS packet

PAT

| Header<br>PID = PAT (0x000) |
| :---: |
| Adaptation field |
| Payload |

Table id (object descriptor section)
= 0x00
Version number
Program number
PMT PID
CRC32

# FIG. 7

MPEG2 TS packet

| Header PID = PMT |
| Adaptation field |
| Payload |

PMT

Table id (object descriptor section)

Version number
Program number
PCR PID

IOD descriptor

{
  stream_type
  PID
  {
    SL descriptor
  }
}
CRC32

IOD descriptor

ES descriptor (OD stream )

| ES ID Stream type specificInfo |

ES descriptor (SD stream

| ES ID Stream type specificInfo |

SL descriptor

| ES ID |

Elementary PID is searched by mapping
ES_ID of an IOD and ES_ID of an SL Descriptor.

EP 2 093 911 A2

# FIG. 8

101 — DAB System

Stream mode

102 — Deinterleaver

103 — RS Decoder

110
System Information
Processing Unit

111
DB

104 — TS Demux

MPEG-4
Video ES → Video Decoder ~106

107

105 — SL De-packetizer

MPEG-4 BSAC Audio ES → BSAC Decoder ~108

MPEG-D MPEG Surround Audio ES

MPEG-4 OD / BIFS → OD/BIFS Decoder ~109

Multi-channel Audio Decoder

JPEG ES →

# FIG. 9A

| Syntax | No. of bits | Mnemonic |
|---|---|---|
| AudioSpecificConfig () | | |
| { | | |
|   audioObjectType = GetAudioObjectType(); | | |
|   samplingFrequencyIndex; | 4 | bslbf |
|   if ( samplingFrequencyIndex == 0xf ) { | | |
|     samplingFrequency; | 24 | uimsbf |
|   } | | |
|   channelConfiguration; | 4 | bslbf |
| | | |
|   sbrPresentFlag=-1; | | |
|   psPresentFlag=-1; | | |
|   if (audioObjectType == 5 ‖ | | |
|     audioObjectType == 29){ | | |
|     extensionAudioObjectType = audioObjectType; | | |
|     sbrPresentFlag = 1; | | |
|     if (audioObjectType == 29){ | | |
|       psPresentFlag=1; | | |
|     } | | |
|     extensionSamplingFrequencyIndex; | 4 | uimsbf |
|     if(extensionSamplingFrequencyIndex==0xf ) | | |
|       extensionSamplingFrequency; | 24 | uimsbf |
|     audioObjectType = GetAudioObjectType(); | | |
|     if (audioObjectType == 22) | | |
|       extensionChannelConfiguration; | 4 | uimsbf |
|   } | | |
|   else{ | | |
|     extensionAudioObjectType = 0; | | |
|   } | | |
|   switch (audioObjectType) { | | |

40

# FIG. 9B

| | | |
|---|---|---|
| case 23: | | |
|     GASpecificConfig(); | | |
|     break; | | |
| case 30: | | |
|     sacPayloadEmbedding; | 1 | uimsbf |
|     SpatialSpecificConfig(); | | |
|     break; | | |
| } | | |
| if(extensionAudioObjectType!=5&& bits_to_decode()>=16){ | | |
|   SyncExtensionType; | 11 | bslbf |
|   if(SyncExtensionType==0x2b7){ | | |
|     extensionAudioObjectType=GetAudioObjectType(); | | |
|     if(extensionAudioObjectType==5){ | | |
|      sbrPresentFlag; | 1 | uimsbf |
|      if(sbrPresentFlag==1){ | | |
|       extensionSamplingFrequencyIndex; | 4 | uimsbf |
|       if(extensionSamplingFrequencyIndex==0xf){ | | |
|        extensionSamplingFrequency; | 24 | uimsbf |
|       } | | |
|      if(bits_to_decode()>=12){ | | |
|       syncExtensionType; | 11 | bslbf |
|       if(syncExtensionType==0x548){ | | |
|        psPresentFlag; | 1 | uimsbf |
|       } | | |
|      } | | |
|     } | | |
|     if (extensionAudioObjectType == 22){ | | |
|      sbrPresentFlag; | 1 | uimsbf |
|      if (sbrPresentFlag == 1){ | | |
|       extensionSamplingFrequencyIndex; | 4 | uimsbf |
| | | |
|       if(extensionSamplingFrequencyIndex==0xf) | | |
|        extensionSamplingFrequency; | 24 | uimsbf |
|       } | | |
|      extensionChannelConfiguration; | 4 | uimsbf |
|      } | | |
|     } | | |
|   } | | |
| } | | |

# FIG. 10

| Syntax | No. of bits | Mnemonic |
|---|---|---|
| GetAudioObjectType () | | |
| { | | |
|   audioObjectType ; | 5 | uimsbf |
|   if (audioObjectType == 31 ) { | | |
|     audioObjectType =32 + audioObjectTypeExt; | 6 | uimsbf |
|     } | | |
|   return audioObjectType; | | |
| } | | |

# FIG. 11

| Syntax | No. of bits | Mnemonic |
|---|---|---|
| GASpecificConfig(samplingFrequencyIndex, channelConfiguration, audioObjectType) | | |
| { | | |
| frameLengthFlag; | 1 | bslbf |
| dependsOnCoreCoder; | 1 | bslbf |
| if ( dependsOnCoreCoder ) { | | |
| coreCoderDelay; | 14 | uimsbf |
| } | | |
| extensionFlag; | 1 | bslbf |
| if ( !channelConfiguration ) { | | |
| program_config_element(); | | |
| } | | |
| if ((audioObjectType == 6)ıı(audioObjectType == 20)) { | | |
| layerNr; | 3 | uimsbf |
| } | | |
| if (extensionFlag){ | | |
| if (audioObjectType == 22){ | | |
| numOfSubFrame; | 5 | bslbf |
| layer_length; | 11 | bslbf |
| } | | |
| if(audioObjectType == 17 ıı audioObjectType == 19 ıı audioObjectType == 20ııaudioObjectType == 23){ | | |
| aacSectionDataResilienceFlag; | 1 | bslbf |
| aacScalefactorDataResilienceFlag; | 1 | bslbf |
| aacSpectralDataResilienceFlag; | 1 | bslbf |
| } | | |
| extensionFlag3; | 1 | bslbf |
| if(extensionFlag3){ | | |
| /*tbd in version 3*/ | | |
| } | | |
| } | | |
| } | | |

# FIG. 12A

| Syntax | No. of bits | Mnemonic |
|---|---|---|
| SpatialSpecificConfig() | | |
| { | | |
|   bsSamplingFrequencyIndex; | 4 | uimsbf |
|   if ( bsSamplingFrequencyIndex == 0xf ) { | | |
|     bsSamplingFrequency; | 24 | uimsbf |
|   } | | |
|   bsSamplingLength; | 7 | uimsbf |
|   bsFreqRes; | 3 | uimsbf |
|   bsTreeConfig; | 4 | uimsbf |
|   bsQuantMode; | 2 | uimsbf |
|   bsOneIcc; | 1 | uimsbf |
|   bsArbitraryDownmix; | 1 | uimsbf |
|   bsFixedGainSur; | 3 | uimsbf |
|   bsFixedGainLFE; | 3 | uimsbf |
|   bsFixedGainDMX; | 3 | uimsbf |
|   bsMatrixMode; | 1 | uimsbf |
|   bsTempShapeConfig; | 2 | uimsbf |
|   bsDecorrConfig; | 2 | uimsbf |
|   bs3DaudioMode; | 1 | uimsbf |
| | | |
|   for (i=0; i<numOttBoxes; i++) { | | Note1 |
|     OttConfig(i); | | |
|   } | | |
|   for (i=0; i<numTttBoxes; i++) { | | Note1 |
|     TttConfig(i); | | |
|   } | | |
|   if (bsTempShapeConfig == 2) { | | |
|     bsEnvQuantMode | 1 | uimsbf |
|   } | | |

# FIG. 12B

| | | |
|---|---|---|
| if (bs3DaudioMode) { | | |
| bs3DaudioHRTFset; | 2 | uimsbf |
| if (bs3DaudioHRTFset==0) { | | |
| ParamHRTFset(); | | |
| } | | |
| } | | |
| ByteAlign(); | | |
| SpatialExtensionConfig(); | | |
| } | | |
| Note1 : numOttBoxes and numTttBoxes are defined by xxx dependent on bs TreeConfig. | | |

20

# FIG. 13

| bsFreqRes | numBands |
|:---:|:---:|
| 0 | 40 |
| 1 | 28 |
| 2 | 20 |
| 3 | 14 |
| 4 | 10 |
| 5 | 7 |
| 6 | 5 |
| 7 | 4 |

# FIG. 14A

| bsTreeConfig | Meaning |
|---|---|
| 0 | 5151 configuration<br>  numOttBoxes = 5<br>  ottDefaultCld[0] = 1<br>  ottDefaultCld[1] = 1<br>  ottDefaultCld[2] = 0<br>  ottDefaultCld[3] = 0<br>  ottDefaultCld[4] = 1<br>  ottModeLfe[0] = 0<br>  ottModeLfe[1] = 0<br>  ottModeLfe[2] = 0<br>  ottModeLfe[3] = 0<br>  ottModeLfe[4] = 1<br>  numTttBoxes = 0<br>  numInChan = 1<br>  numOutChan = 6<br>  output channel ordering: FC, LF, FL, FR, BL, BR |
| 1 | 5152 configuration<br>  numOttBoxes = 5<br>  ottDefaultCld[0] = 1<br>  ottDefaultCld[1] = 0<br>  ottDefaultCld[2] = 1<br>  ottDefaultCld[3] = 1<br>  ottDefaultCld[4] = 1<br>  ottModeLfe[0] = 0<br>  ottModeLfe[1] = 0<br>  ottModeLfe[2] = 1<br>  ottModeLfe[3] = 0<br>  ottModeLfe[4] = 0<br>  numTttBoxes=0<br>  numInChan = 1<br>  numOutChan = 6<br>  output channel ordering: FL, BL, FR, BR, FC, LF |

# FIG. 14B

| 2 | 525 configuration<br>    numOttBoxes = 3<br>    ottDefaultCld[0] = 1<br>    ottDefaultCld[1] = 1<br>    ottDefaultCld[2] = 1<br>    ottDefaultCld[3] = 1<br>    ottDefaultCld[4] = 0<br>    ottDefaultCld[5] = 1<br>    ottDefaultCld[6] = 0<br>    ottModeLfe[0] = 1<br>    ottModeLfe[1] = 0<br>    ottModeLfe[2] = 0<br>    numTttBoxes=1<br>    numInChan = 2<br>    numOutChan = 6<br>    output channel ordering: FL, BL, FR, BR, FC, LF |
|---|---|

# FIG. 15

| bsQuantMode | Meaning |
|---|---|
| 0 | default fine quantization for CLD, ICC, CPC |
| 1 | as above, but with CLD EdQ curve 1@-1dB..5@-21dB |
| 2 | as above, but with CLD EdQ curve 1@-1dB..10@-25dB |
| 3..7 | Reserved |

# FIG. 16

| bsFixedGainSur | Surround gain |
|:---:|:---:|
| 0 | 1 |
| 1 | $2^{(1/4)}$ |
| 2 | $2^{(2/4)}$ |
| 3 | $2^{(3/4)}$ |
| 4 | $2^{(4/4)}$ |
| 5..7 | Reserved |

# FIG. 17

| bsFixedGainLFE | LFE gain |
|:---:|:---:|
| 0 | 1 |
| 1 | $10^{(1/2)}$ |
| 2 | $10^{(2/2)}$ |
| 3 | $10^{(3/2)}$ |
| 4 | $10^{(4/2)}$ |
| 5..7 | Reserved |

# FIG. 18

| bsFixedGainDMX | Downmix gain |
|---|---|
| 0 | 1 |
| 1 | 2^(1/4) |
| 2 | 2^(2/4) |
| 3 | 2^(3/4) |
| 4 | 2^(4/4) |
| 5 | 2^(5/4) |
| 6 | 2^(6/4) |
| 7 | 2^(8/4) |

# FIG. 19

| bsTempShapeConfig | Meaning |
|---|---|
| 0 | do not apply temporal shaping |
| 1 | apply STP |
| 2 | apply GES |
| 3 | reserved |

# FIG. 20

| bsDecorrConfig | Meaning |
|:---:|:---:|
| 0 | QMF split frequencies: 3, 15, 24, 65 |
| 1 | QMF split frequencies: 3, 50, 65, 65 |
| 2 | QMF split frequencies: 0, 15, 65, 65 |
| 3 | reserved |

# FIG. 21

| bsEnvQuantMode | Meaning |
|:---:|:---:|
| 0 | 5-step quantizer |
| 1 | reserved |

# FIG. 22

| bs3DaudioHRTFset | Meaning |
|---|---|
| 0 | set of HRTF parameters defined by ParamHRTFset() |
| 1 | reserved |
| 2 | reserved |
| 3 | reserved |

# FIG. 23

| Syntax | No. of bits | Mnemonic |
|---|---|---|
| SpatialFrame() | | |
| { | | |
|     FramingInfo() | | |
|     bsIndependencyFlag | 1 | uimsbf |
|     OttData(); | | |
|     TttData(); | | |
|     SmgData(); | | |
|     TempShapeData(); | | |
|     if(bsArbitraryDownmix!=0){ | | |
|         ArbitraryDownmixData(); | | |
|     } | | |
|     ByteAlign(); | | |
|     SpatialExtensionFrame(); | | |
| } | | |